# EUROPEAN PATENT SPECIFICATION

(11) **EP 2 499 527 B1**
(45) Date of publication and mention of the grant of the patent: **02.04.2014**
(21) Application number: 09774851.1
(22) Date of filing: 12.11.2009
(51) Int. Cl.: G02B 6/44

(54) **TRAY FOR HOUSING SPLICES BETWEEN OPTICAL FIBERS**
TRÄGER ZUR AUFNAHME VON SPLEISSUNGEN ZWISCHEN GLASFASERN
PLATEAU POUR RECEVOIR DES ÉPISSURES ENTRE FIBRES OPTIQUES

(43) Date of publication of application: 19.09.2012
(73) Proprietor: Prysmian S.p.A., 20126 Milano (IT)
(72) Inventor: ABBIATI, Fabio, I-20126 Milano (IT)
(74) Representative: Colombo, Stefano Paolo
(86) International application number: PCT/EP2009/065021
(87) International publication number: WO 2011/057666

(56) References cited:
- WO-A1-2008/033997
- WO-A2-2009/131895
- US-A- 5 420 956
- US-A- 5 420 957
- US-A- 5 572 617

## Description

### Technical field

The present invention relates to the field of installation of optical fiber networks. In particular, the present invention relates to a tray configured to house splices between optical fibers, and to an optical transition box comprising such a tray.

### Background art

In the field of optical communication networks, the expression "Fiber-to-the-x" ("FTTx") is used to denote a network architecture making use of optical fibers. In particular, the expression "Fiber-to-the-Premises" ("FTTP") denotes the portion of the optical communication network that reaches the premises (home, offices and the like) of the end user.

Splicing boxes are commonly used to house fiber splices and connectors for allowing connection of fibers from an inlet cable to fibers used inside a building.

Installation of an optical fiber network typically requires extracting lengths of optical fibers from optical fiber cables and splicing each other these lengths of optical fibers. As an alternative to extraction, the sheath of an optical fiber cable may be removed (e.g. for few meters) and an element of the optical fiber cable may be cut, thereby freeing a length of the optical fibers housed therein. The splices may be implemented as fusion splices (typically covered by splice protectors) or mechanical splices.

The extracted or freed optical fiber lengths with their splices are then typically arranged in suitable trays.

EP 1 377 862 discloses an optical fiber organizer comprising a base tray and a main tray hinged to the base tray. The (second) surface of the main tray is provided with optical splice holders in which optical fibers may be accommodated, and an island around which overlength fiber can be wound.

WO 2008/059187 discloses a splicing box including an insert in turn including a splice container for routing, splicing and storing fibers. The splice container includes a fiber guiding element and splice bays which house and store splice joints. The splice container has a substantially elliptical shape composed of two straight sides connected by two arcs. The splice bays are arranged along one of the straight sides of the splice container. The splice container is arranged so that the straight sides of the splice container (or in other words the splice bays) are arranged at an acute angle θ relative to the left-hand sidewall of the box.

US 2008/0205844 discloses a splice tray having a base and a cover rotatably attached to the base. The splice tray includes a plurality of splice holders joined to the base of the splice tray and adapted to selectively receive a splice. The splice tray further includes an optical fiber routing device provided on the inner surface of the cover of the splice tray.

The Applicant has perceived that the above known trays for housing splices between optical fibers have some drawbacks.

As to the tray of US 2008/0205844, it is disadvantageously a two-layer tray in which the splice holders are arranged at a first layer (i.e. the base of the tray) and the optical fiber routing device is arranged at a second layer (i.e. the cover of the tray). Accordingly, this tray is disadvantageously bulky. Further, one should take particular care when the optical fiber lengths are arranged in the optical fiber routing device, so to avoid that such lengths are pierced between base and cover or that such lengths are bent by a too short bending radius when the cover is rotated to be closed onto the base.

As to the trays of WO 2008/059187 and EP 1 377 862, the splice holders and the device for arranging the excess-length of the splice optical fibers are both arranged at a same layer, i.e. on a surface of the tray. Such trays are therefore thinner than the tray of US 2008/0205844. However, a reduced number of splice holders may disadvantageously be arranged in the trays of WO 2008/059187 and EP 1 377 862. Indeed, while in the tray of US 2008/0205844 splice holders may occupy the base surface over the whole of its width, in the trays of WO 2008/059187 and EP 1 377 862 only a portion of the tray surface may be used for the splice holders. Indeed, a portion of the surface shall be reserved for arranging the excess-length of the splice optical fibers.

Therefore, the Applicant faced the problem of providing a tray for housing splices between optical fibers that overcomes the aforesaid drawbacks.

In particular, the Applicant faced the problem of providing a tray for housing splices between optical fibers in which splices and excess-length of spliced optical fibers may be arranged on a same surface of the tray (i.e. the tray is single-layer) and in which the area of the tray surface dedicated to house splices is exploited in a more efficient way in comparison to the trays of WO 2008/059187 and EP 1 377 862.

On one hand, this would allow increasing the number of splices that can be housed in the tray while keeping the tray size constant. On the other hand, this would allow reducing the tray size while keeping the number of splices that can be housed therein constant.

Both effects are particularly desirable when the tray is used for installing an FTTP or FTTX network. In this application, indeed, optical transition boxes should fulfill both aesthetic requirements and very tight size requirements. Further, the number of users requesting FTTP and FTTX services is increasing. Therefore, particularly compact optical transition boxes housing a high number of splices are needed.

The Applicant has noticed that a more efficient exploitation of the area of the tray surface dedicated to house splices may be achieved by arranging a plurality of splice holders according to a two-dimensional arrangement comprising least two columns of splice holders.

However, the Applicant has noticed that, in such two-dimensional arrangement, overlapping between optical fibers is very likely. This overlapping may negatively affect accessibility of the optical fiber lengths and their splices housed in the tray. Indeed, if two optical fiber lengths overlap, access to the underneath optical fiber length and its splice is obstructed by the optical fiber length laying above. Moreover, overlapping disadvantageously induces friction between the optical fiber lengths, which friction disadvantageously increases microbending losses and wear of the involved optical fiber lengths. Overlapping should accordingly be avoided.

US 5 420 957 discloses a splice tray comprising a splice holder having a first row of channels and a second row of channels, each channel being capable of holding a single splice. A plurality of rigid pass-through channels are provided which alternate with the splice holding channels. In particular, a splice holding channel is formed on either sides of each pass-through channel. When a fiber is passed through a pass-through channel, it is held firmly within it by means of slits formed, as needed, in holding members provided at both ends of the pass-through channel.

US 5 572 617 discloses a holder for splices comprising two comb-type sections between which a plane free area extends over the full width of the holder. Each comb-type section is composed of webs disposed in parallel to the longitudinal axis of the holder for splices. Between each two webs there is formed a groove into which the glass fiber together with the splice protection is inserted. On the bottom side of the holder the are provided semi-circular depressions which form channels through which the switch wires can be individually passes underneath the holder.

WO 2009/131895 discloses a tray with two splice regions arranged on opposite sides of the tray.

US 5 420 956 discloses a case for passive optical components, having receiving portions for couplers and splices, the receiving portion for splices having guide grooves for receiving splices. A fiber guiding channel is disposed between the last guide groove and the sidewall of the case.

### Summary of the invention

The Applicant has found that, in the above mentioned two-dimensional arrangement of splice holders comprising at least two columns, optical fiber overlapping may be avoided by providing at least one fiber passageway in each column. In this way, optical fiber lengths having their splices housed in splice holders placed in a given column may run in the passageways of the other column(s), so that they advantageously bypass the other column(s) without overlapping with the optical fiber lengths having splices housed in these other column(s).

Therefore, advantageously, the area of the tray surface dedicated to house splices is exploited in a more efficient way in comparison to the trays of WO 2008/059187 and EP 1 377 862, thereby allowing to arrange an increased number of splices or, alternatively, to reduce the size of this area.

For instance, if N is the maximum number of splice holders that can be arranged on a single column when the area of the tray surface dedicated to house splices has a given width, providing M columns of splice holders advantageously allows increasing the number of splice holders from N to NxM. Dually, distributing the N splice holders in M columns advantageously allows reducing the width of the area by a factor M.

Moreover, the more efficient exploitation of the area dedicated to house splices advantageously allows placing this area and the area dedicated to arrange excess-length of spliced optical fibers on a same surface of the tray, without increasing the tray size. This advantageously allows providing a single-layer tray, which is therefore much more compact than the tray of US 2008/0205844.

According to a first aspect, the present invention provides a tray for housing optical fiber splices, the tray comprising a splice holding area comprising a plurality of splice holders, wherein the plurality of splice holders is arranged according to a two-dimensional arrangement comprising at least a first column and a second column, wherein:
- the first column comprises a plurality of adjacent first splice holders and a first fiber passageway adjacent to the plurality of first adjacent splice holders and suitable for housing lengths of a plurality of first optical fibers so that they bypass the first column;
- the second column comprises a plurality of adjacentsecond splice holders and a second fiber passageway suitable for housing lengths of a plurality of second optical fibers so that they bypass the second column,
characterized in that the splice holding area further comprises at least one divider interposed between the first column and the second column, the at least one divider being arranged so as to divide an area between the first column and the second column into at least a first funnel-shaped portion and a second funnel-shaped portion, the first funnel-shaped portion and the second funnel-shaped portion being non overlapping, said first funnel-shaped portion having an opening facing the first fiber passageway and a mouth facing the plurality of adjacent second splice holders and the second funnel-shaped portion having an opening facing the second fiber passageway and a mouth facing the plurality of adjacent first splice holders.

Preferably, the at least one first fiber passageway and the at least one second fiber passageway are staggered.

According to a first embodiment, the first column comprises two first fiber passageways located in intermediate positions along the first column, and the second column comprises three second fiber passageways located at a first end, at the centre and at a second end of the second column, respectively.

According to a second embodiment, the first column comprises one first fiber passageway located at the centre of the first column, and the second column comprises two second fiber passageways located at opposite ends of the second column.

According to a third embodiment, the first column comprises one first fiber passageway located at an end of the first column, and the second column comprises one second fiber passageway located at an opposite end of the second column.

Preferably, the first column and the second column are placed at a reciprocal distance, such that paths followed by the at least one first optical fiber and the at least one second optical fiber have a minimum bending radius higher than or equal to a predefined minimum bending radius.

Preferably, the splice holding area further comprises guiding protrusions arranged between the first column and the second column.

Preferably, the tray comprises a surface, the surface comprising the splice holding area and a fiber winding area.

Preferably, the splice holding area and the fiber winding area are non-overlapping adjacent areas divided by a division line substantially parallel to a length of the surface.

Preferably, the outer guiding channels enclose the splice holding area and the fiber winding area.

Profitably, the outer guiding channels have at least one separation and fixing comb.

Preferably, the fiber winding area has inner guiding channels.

Preferably, the tray further comprises at least one hinge configured to fix the tray to a base of an optical transition box, and to allow the tray rotating between a first position in which it at least partially covers the base and a second position in which it allows free access to the base.

According to a second aspect, the present invention provides an optical transition box comprising a base, a cover and a tray hinged to the base and configured to rotate between a first position in which it at least partially covers the base and a second position in which it allows free access to the base, the optical transition box being characterized in that the tray is as set forth above.

### Brief description of the drawings

The present invention will become fully clear by reading the following detailed description, given by way of example and not of limitation, to be read by referring to the accompanying drawings, wherein:
- Figure 1 shows a top plan view of a tray for housing splices between optical fibers, according to a first embodiment of the present invention;
- Figure 2 is an enlarged view of a portion of the tray of Figure 1;
- Figures 3a and 3b are enlarged views of portions of the tray of Figure 1;
- Figure 4 schematically shows how splices between optical fibers may be arranged in the tray of Figure 1; and
- Figure 5 is a schematic representation of an arrangement of splice holders for a tray according to a second embodiment of the present invention.

### Detailed description of preferred embodiments of the invention

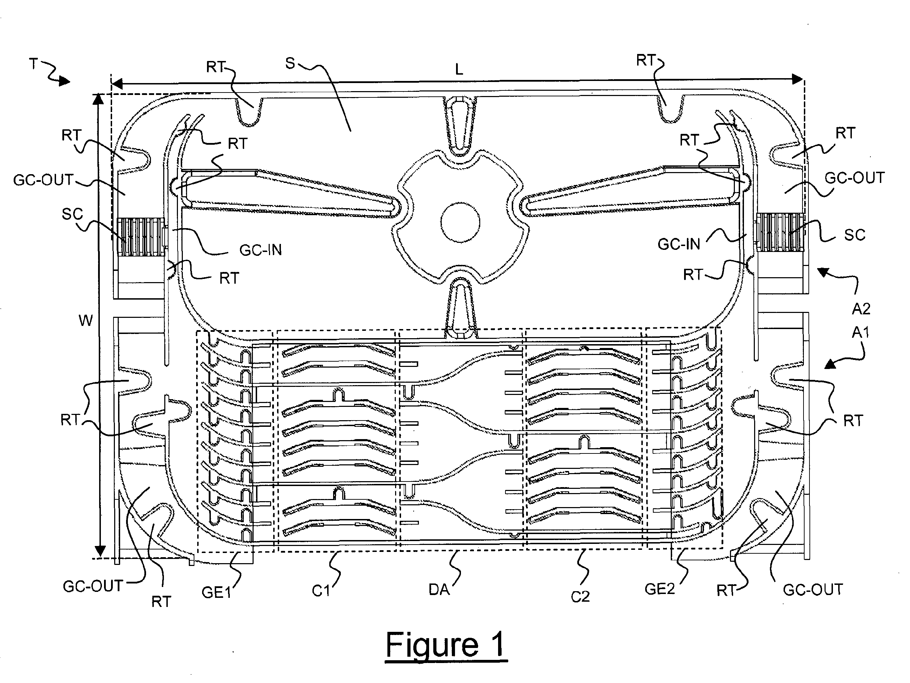

With reference to Figures 1, 2, 3a and 3b, a tray T for housing splices between optical fibers according to a first embodiment of the present invention will be described.

The tray T preferably comprises hinges configured to fix the tray T to a base of an optical transition box, and to allow the tray T rotating between a first position in which it at least partially covers the base and a second position in which it allows free access to the base.

The tray T also preferably comprises a surface S having a substantially rectangular shape with rounded corners. The surface S preferably has a length L comprised between 100 mm and 300 mm, more preferably equal to 200 mm. Besides, the surface S preferably has a width W comprised between 114 mm and 154 mm, more preferably equal to 134 mm. The tray T is preferably made of a single piece of injection moulded plastic (ABS FR) with the various components (that will be described herein after) being formed on the surface S.

The surface S preferably has outer guiding channels GC-OUT running close to the periphery of the surface S, wherein optical fiber lengths coming from the base of the optical transition box may be arranged. The outer guiding channels GC-OUT preferably have separation and fixing combs SC suitable for properly fixing the incoming optical fiber buffers, spacing the optical fiber lengths coming from the underlying base and preventing their overlapping.

The portion of surface S enclosed within the outer guiding channels GC-OUT is preferably divided into a splice holding area A1 and a fiber winding area A2. The splice holding area A1 and the fiber winding area A2 are preferably non-overlapping adjacent areas, and their division line is preferably substantially parallel to the length of the surface S.

The fiber winding area A2 preferably has inner guiding channels GC-IN running adjacent to the outer guiding channels GC-OUT, wherein lengths of optical fibers coming from the splice holding area A1 of the tray T may be arranged.

The outer guiding channels GC-OUT and the inner guiding channels GC-IN preferably have straight portions and curved portions. The curved portions preferably have bending radius equal to or higher than a predefined minimum bending radius. The predefined minimum bending radius depends on the type of optical fibers to be arranged in the tray T, and is preferably equal to 20 mm. The outer guiding channels GC-OUT and the inner guiding channels GC-IN preferably have retaining tabs RT suitable for retaining the optical fiber lengths arranged in the outer guiding channels GC-OUT and in the inner guiding channels GC-IN.

The splice holding area A1 preferably has a number of splice holders arranged according to a two-dimensional arrangement comprising least two columns.

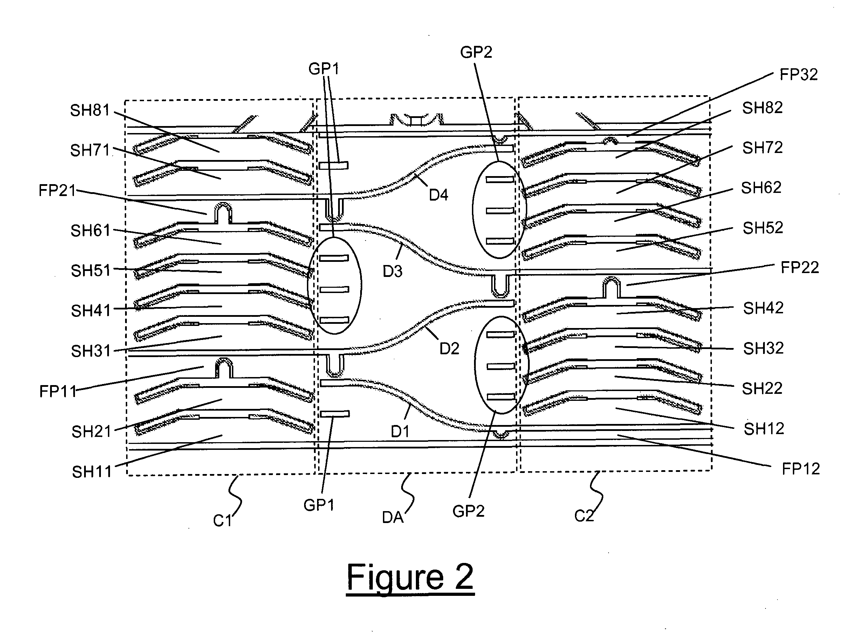

By way of example, in the tray T according to the first embodiment of the present invention, sixteen splice holders SH11-SH81 and SH12-SH82 are arranged according to a two-dimensional arrangement comprising a first column C1 and a second column C2. More particularly, as shown in Figure 2, eight splice holders SH11-SH81 are arranged in a first column C1, whereas eight splice holders SH12-SH82 are arranged in a second column C2. The distance between consecutive columns is preferably chosen so that the path followed by an optical fiber between two consecutive columns has a minimum bending radius higher than or equal to the above mentioned predefined minimum bending radius. For instance, the distance between consecutive columns may be equal to or higher than 25 mm. Each splice holder SH11-SH81, SH12-SH82 preferably has a width of 4mm and a length of 45 mm. The splice holding area A1 preferably has a width comprised between 45 mm and 65 mm, more preferably equal to 55 mm. Further, the splice holding area A1 preferably has a length comprised between 100 mm and 140 mm, more preferably equal to 120 mm.

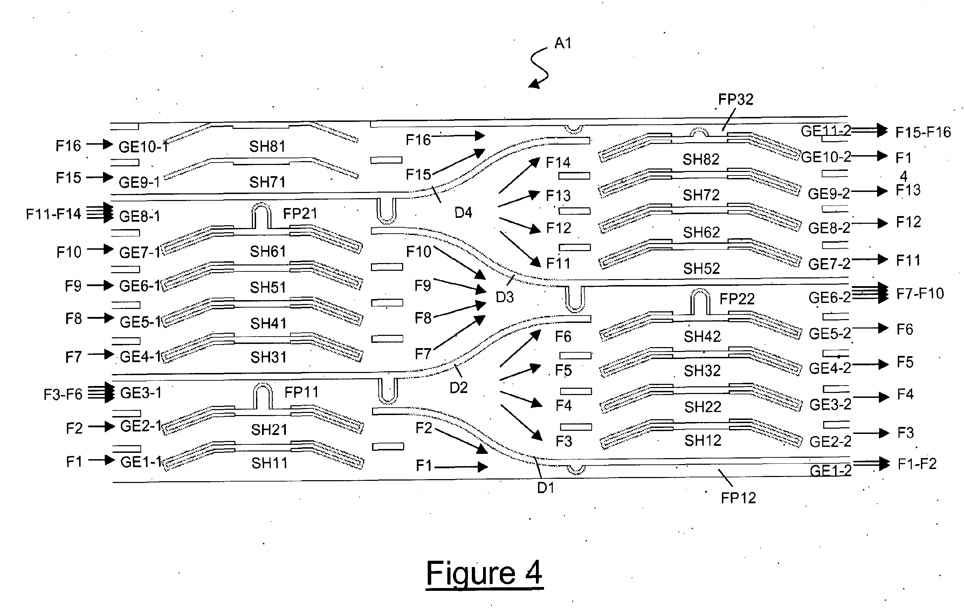

In Figure 4, the splice holders of each column are aligned along their length, so as to form a column having a straight axis parallel to the width of the tray. However, this is non limiting. For instance, the splice holders of a column may be partially non-aligned along their length, so as to form a column with a straight axis arranged at an acute angle relative to the width of the tray. Alternatively, the splice holders of a column may be partially non-aligned along their length, so as to form a column with a wavy axis.

According to preferred embodiments of the present invention, the splice holding area A1 also comprises at least one fiber passageway arranged in each column. By way of example, as it can be seen in Figure 2, in the tray T according to the first embodiment of the present invention two fiber passageways FP11, FP21 are arranged in the first column C1, whereas three passageways FP12, FP22, FP32 are arranged in the second column C2.

According to preferred embodiments of the present invention, the passageway(s) of each column are arranged in symmetric positions along the column. Further, the passageway(s) provided in consecutive columns are staggered. By way of example, as it can be seen in Figure 2, in the first column C1 the fiber passageway FP11 is located in intermediate (i.e. neither at the centre, nor at the end of the column) symmetric positions between the splice holders SH21 and SH31, while the fiber passageway FP21 is located between the splice holders SH61 and SH71. Besides, in the second column C2, the fiber passageways FP12 and FP32 are located externally to the splice holders at the ends of the second column C2, while the fiber passageway FP22 is located at the centre of the second column (i.e. between the splice holders SH42 and SH52).

The splice holding area A1 further preferably comprises dividers interposed between each pair of consecutive columns of splice holders. The dividers are preferably arranged so as to divide the area between the pair of consecutive columns in at least two non-overlapping substantially funnel-shaped portions having their opening facing one or more adjacent splice holders of a column and their mouth facing a single fiber passageway of the other column. For example, as shown in Figure 2, in the tray T a dividing area DA between the first column C1 and the second column C2 comprises four dividers D1, D2, D3, D4. The divider D1 defines a first substantially funnel-shaped portion with opening facing the splice holders SH11, SH21 and mouth facing the fiber passageway FP12. The dividers D1 and D2 define a second substantially funnel-shaped portion with opening facing the splice holders SH12-SH42 and mouth facing the fiber passageway FP11. The dividers D2 and D3 define a third substantially funnel-shaped portion with opening facing the splice holders SH31-SH61 and mouth facing the fiber passageway FP22. The dividers D3 and D4 define a fourth substantially funnel-shaped portion with opening facing the splice holders SH52-SH82 and mouth facing the fiber passageway FP21. The divider D4 and the upper sidewall of surface S define a fifth substantially funnel-shaped portion with opening facing the splice holders SH71 and SH81 and mouth facing the fiber passageway FP32.

The dividers D1, D2, D3, D4 may have straight portions and/or curved portions. By way of example, in the tray T according to the first embodiment of the present invention, the dividers D1, D2, D3, D4 have two curved portions arranged according to an "S" profile, the bending radius of each curved portion being equal to or higher than the above mentioned predefined minimum bending radius.

Preferably, in addition to the dividers, the dividing area DA may further comprise guiding protrusions GP1, GP2. The dividers D1, D2, D3, D4 and the guiding protrusions GP1, GP2 advantageously facilitate the operation of arranging optical fibers lengths with their respective splices into the tray T without overlapping the optical fibers lengths, as it will be described in further detail herein after.

The splice holding area A1 further preferably comprises guiding elements located externally to the columns of splice holders and fiber passageways. In particular, the splice holding area A1 preferably comprises a first column of guiding elements located on the left of the leftmost column and including a guiding element for each splice holder and for each fiber passageway of the leftmost column. Besides, the splice holding area A1 preferably comprises a second column of guiding elements located on the right of the rightmost column and including a guiding element for each splice holder and for each fiber passageway of the rightmost column.

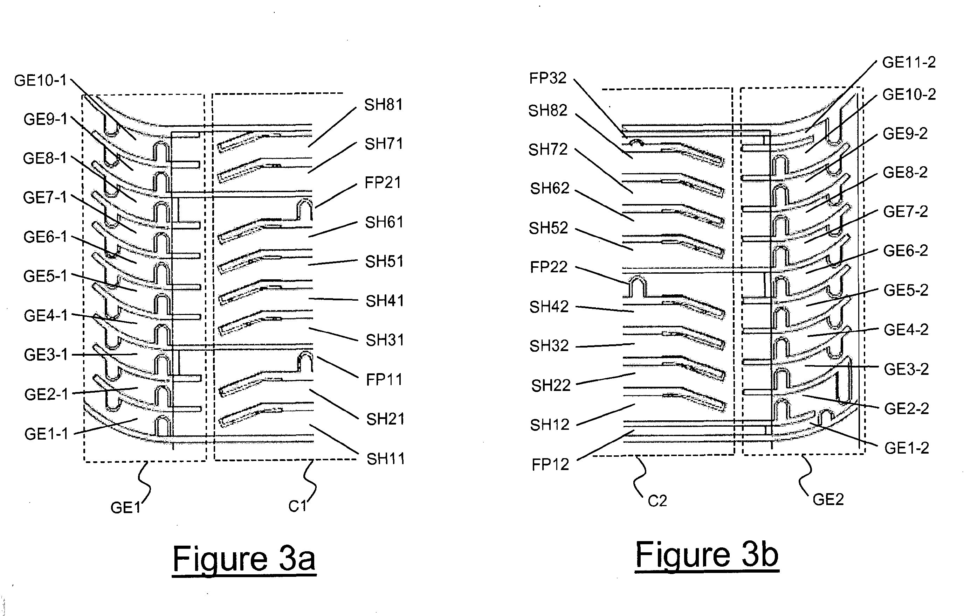

For instance, in the tray T the splice holding area A1 comprises a first column GE1 of ten guiding elements GE1-1, GE2-1, ..., GE10-1 (eight for the splice holders SH11-SH81 plus two for the fiber passageways FP11, FP21) located on the left of the first column C1 (see Figure 2a) and a second column GE2 of eleven guiding elements GE1-2, GE2-2, ..., GE11-2 (eight for the splice holders SH12-SH82 plus three for the fiber passageways FP12, FP22, FP32) located on the right of the second column C2 (see Figure 2b). The guiding elements GE1-1, GE2-1, ..., GE10-1, GE1-2, GE2-2, ..., GE11-2 are preferably suitable for guiding the optical fiber lengths exiting the splices housed in the splice holders SH11-SH81 and SH12-SH82 to the fiber winding area A2. Each guiding element GE1-1, GE2-1, ..., GE10-1, GE1-2, GE2-2, ..., GE11-2 preferably have a straight portion and a curved portion. The curved portion preferably has bending radius equal to or higher than the above mentioned predefined minimum bending radius. The guiding elements GE1-1, GE2-1, ..., GE10-1, GE1-2, GE2-2, ..., GE11-2 preferably have retaining tabs (visible in Figures 3a and 3b) suitable for retaining the optical fiber lengths arranged in the guiding elements GE1, GE2 ..., GE10-1, GE1-2, GE2-2, ..., GE11-2.

With reference to Figure 4, it will be now described in detail how the optical fiber lengths with their splices may be arranged in the tray T, and in particular in the splice holding area A1 of the tray T. It is assumed that the tray T is used for housing sixteen optical fibers lengths F1-F16 with their respective splices (e.g. fusion splices or mechanical splices). The arrangement of the optical fibers lengths F1-F16 with their respective splices will be described starting from the leftmost side of the splice holding area A1 and following the paths of the optical fibers lengths F1-F16 through the splice holding area A1 towards the rightmost side thereof. This is however merely for the sake of clarity of the description, and does not necessarily mean that an operator necessarily has to arrange the optical fibers lengths F1-F16 starting from the leftmost side of the splice holding area A1.

Preferably, two optical fiber lengths F1, F2 coming from the fiber winding area A2 through the inner guiding channel GC-IN enter the splice holding area A1 through the guiding elements GE1-1, GE2-1 respectively, and their splices are housed in the splice holders SH11, SH21 respectively. The two optical fiber lengths F1, F2 are then grouped and passed together through the fiber passageway FP12. The optical fiber lengths F1, F2 finally exit the splice holding area A1 through the guiding element GE1-2, and they return to the fiber winding area A2 through the other inner guiding channel GC-IN.

Besides, four optical fiber lengths F3 to F6 coming from the fiber winding area A2 through the inner guiding channel GC-IN preferably enter the splice holding area A1 through the guiding element GE3-1 and are passed together through the fiber passageway FP11. The four optical fiber lengths F3 to F6 are then ungrouped and their splices are housed in the splice holders SH12 to SH42, respectively. The optical fiber lengths F3 to F6 finally exit the splice holding area A1 through the guiding elements GE2-2 to GE5-2 respectively, and they return to the fiber winding area A2 through the inner guiding channel GC-IN.

Besides, four optical fiber lengths F7 to F10 coming from the fiber winding area A2 through the inner guiding channel GC-IN enter the splice holding area A1 through the guiding elements GE4-1 to GE7-1 respectively, and their splices are housed in the splice holders SH31 to SH61 respectively. The four optical fiber lengths F7 to F10 are then grouped and passed together through the fiber passageway FP22. The optical fiber lengths F7 to F10 finally exit the splice holding area A1 through the guiding element GE6-2, and they return to the fiber winding area A2 through the inner guiding channel GC-IN.

Besides, four optical fiber lengths F11 to F14 coming from the fiber winding area A2 through the inner guiding channel GC-IN preferably enter the splice holding area A1 through the guiding element GE8-1 and are passed together through the fiber passageway FP21. The four optical fiber lengths F11 to F14 are then ungrouped and their splices are housed in the splice holders SH52 to SH82, respectively. The optical fiber lengths F11 to F14 finally exit the splice holding area A1 through the guiding elements GE27-2 to GE210-2 respectively, and they return to the fiber winding area A2 through the inner guiding channel GC-IN.

Finally, two optical fiber lengths F15, F16 coming from the fiber winding area A2 through the inner guiding channel GC-IN enter the splice holding area A1 through the guiding elements GE9-1, GE10-1 respectively, and their splices are housed in the splice holders SH71, SH81 respectively. The two optical fiber lengths F15, F16 are then grouped and passed together through the fiber passageway FP32. The optical fiber lengths F15, F16 finally exit the splice holding area A1 through the guiding element GE11-2, and they return to the fiber winding area A2 through the inner guiding channel GC-IN.

When the operation of arranging the spliced optical fibers is completed, therefore, each splice is arranged in a respective splice holder either of the first column C1 or of the second column C2.

For each splice housed in the first column C1, a first length of optical fiber exits the splice on the left side thereof and runs to the area A2 through the guiding elements GE1-1, GE2-1, GE4-1, ..., GE7-1, GE9-1 and GE10-1, while a second length of optical fiber exits the splice on the right side thereof, bypasses the second column C2 through the fiber passageways FP12, FP22, FP32 and runs to the area A2 through the guiding elements GE1-2, GE6-2 and GE11-2. For each splice housed in the second column C2, a first length of optical fiber exits the splice on the right side thereof and runs to the area A2 through guiding elements GE2-2, ..., GE5-2, GE7-2, ..., GE9-2, while a second length of optical fiber exits the splice on the left side thereof, bypasses the second column C2 through the fiber passageways FP11, FP21 and runs to the area A2 through the guiding elements GE3-1 and GE8-1.

Therefore, advantageously, up to sixteen optical fiber lengths with their respective splices may be arranged in the splice holding area A1, without overlapping each other. Indeed, the optical fiber lengths having their splices housed in the splice holders of the first column C1 (i.e. F1, F2, F7 to F10, F15, F16) advantageously bypass the second column C2 without overlapping with the other optical fiber lengths, thanks to the fiber passageways FP12, FP22 and FP32 provided in the second column C2. Similarly, the optical fiber lengths having their splices housed in the splice holders of the second column C2 (i.e. F3 to F6 and F11 to F14) advantageously bypass the first column C1 without overlapping with the other optical fiber lengths, thanks to the fiber passageways FP11, FP21 provided in the first column C1.

Avoiding overlapping between the optical fiber lengths F1 to F16 advantageously guarantees their accessibility. Therefore, each single optical fiber length with its respective splice may be advantageously handled (e.g. removed from the tray T or added in the tray T) without the need to move the other optical fiber lengths arranged in the tray T. Further, microbending losses and wear induced by friction between the optical fiber lengths arranged in the tray T are advantageously minimized.

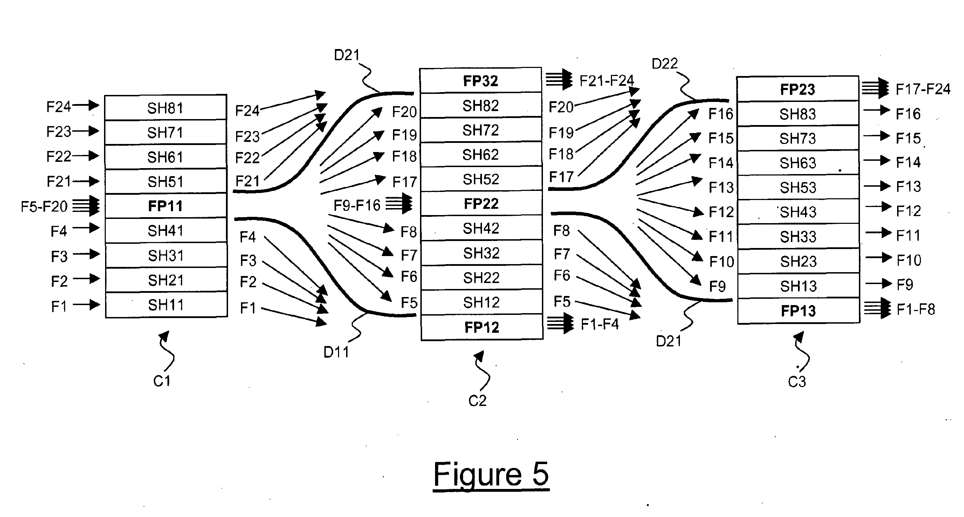

Figure 5 schematically shows another arrangement of splice holders and fiber passageways for a tray according to a second embodiment of the present invention.

This arrangement comprises twenty-four splice holders arranged on three columns. In particular, this arrangement comprises eight splice holders SH11-SH81 arranged on a first column C1, eight splice holders SH12-SH82 arranged on a second column C2, and eight splice holders SH13-SH83 arranged on a third column C3. The first column C1 comprises a single fiber passageway FP11 arranged at the centre of the first column C1 (i.e. between the splice holders SH41 and SH51). The second column C2 comprises three fiber passageways FP32, FP22 and FP32 arranged in symmetric positions along the second column C2, in particular at the column ends (externally to the splice holders SH12 and SH82) and at the centre of the second column C2 (i.e. between the splice holders SH42 and SH52). The third column C3 comprises two fiber passageways FP13, FP23 arranged in symmetric positions along the third column C3, in particular at the column ends (externally to the splice holders SH13 and SH83).

The area comprised between the first column C1 and second column C2 comprises two dividers D11, D21 dividing this area in three non-overlapping substantially funnel-shaped portions: a first portion (external to the divider D11) has opening facing the splice holders SH11-SH41 and mouth facing the fiber passageway FP12; a second portion (between the dividers D11 and D21) has opening facing the splice holders SH12-SH82 and the fiber passageway FP22, and mouth facing the fiber passageway FP11; and a third portion (external to the divider D21) has opening facing the splice holders SH51-SH81 and mouth facing the fiber passageway FP32.

Similarly, the area comprised between the second column C2 and third column C3 comprises two dividers D12, D22 dividing this area in three non-overlapping substantially funnel-shaped portions: a first portion (external to the divider D12) has opening facing the splice holders SH12-SH42 and the fiber passageway FP12, and mouth facing the fiber passageway FP13; a second portion (between the dividers D12 and D22) has opening facing the splice holders SH13-SH83 and mouth facing the fiber passageway FP22; and a third portion (external to the divider D22) has opening facing the splice holders SH52-SH82 and the fiber passageway FP32, and mouth facing the fiber passageway FP32.

It will be now described in detail how of optical fiber lengths with their splices may be arranged in a tray comprising the arrangement of splice holders and fiber passageways shown in Figure 5. It is assumed that the tray is used for housing twenty-four optical fibers lengths F1-F24 with their respective splices (e.g. fusion splices or mechanical splices). Again, the description will start from the leftmost side of the arrangement shown in Figure 5 and will follow the paths of the optical fiber lengths through the arrangement towards the rightmost side thereof. This is however merely for the sake of clarity of the description, and does not necessarily mean that an operator necessarily has to arrange the optical fibers lengths F1-F24 starting from the leftmost side.

Preferably, four optical fiber lengths F1 to F4 coming from the fiber winding area (not shown in Figure 5) have their splices housed in the splice holders SH11 to SH41 respectively. The four optical fiber lengths F1 to F4 are then grouped and passed together through the fiber passageway FP12, so that they bypass the second column C2.

Besides, sixteen optical fiber lengths F5 to F20 coming from the fiber winding area (not shown in Figure 5) are passed together through the fiber passageway FP11, so that they bypass the first column C1. Then, eight of these sixteen optical fiber lengths F5 to F20 are ungrouped (e.g. the optical fiber lengths F5 to F9 and F17 to F20), and their splices are housed in the splice holders SH12 to SH82, respectively. The remaining eight grouped optical fiber lengths F9 to F16 are passed through the fiber passageway FP22, so that they bypass the second column C2.

At the output of the second column C2, four optical fiber lengths F5 to F8 coming from the splice holders SH12 to SH42 are grouped with the four optical fiber lengths F1 to F4 coming from the fiber passageway FP12 and are passed together through the fiber passageway FP13, so that they bypass the third column C3 and return to the fiber winding area (not shown in Figure 5).

Besides, the eight grouped optical fiber lengths F9 to F16 exiting from the fiber passageway FP22 are ungrouped, and their splices are housed in the splice holders SH13 to SH83. Then, they return to the fiber winding area (not shown in Figure 5)

Finally, four optical fiber lengths F17 to F20 coming from the splice holders SH52 to SH82 are grouped with the four optical fiber lengths F21 to F24 coming from the fiber passageway FP32 and then passed together through the fiber passageway FP23, so that they bypass the third column C3 and return to the fiber winding area (not shown in Figure 5).

When the operation of arranging the spliced optical fibers is completed, therefore, each splice is arranged in a respective splice holder either of the first column C1, the second column C2 or the third column C3.

For each splice housed in the first column C1, a first length of optical fiber exits the splice on the left side thereof and runs to the area A2, while a second length of optical fiber exits the splice on the right side thereof, bypasses the second column C2 and the third column C3 and runs to the area A2. For each splice housed in the second column C2, a first length of optical fiber exits the splice on the left side thereof, bypasses the first column C1 and runs to the area A2, while a second length of optical fiber exits the splice on the right side thereof, bypasses the third column C3 and runs to the area A2. For each splice housed in the third column C3, a first length of optical fiber exits the splice on the left side thereof, bypasses the second column C2 and the first column C1 and runs to the area A2, while a second length of optical fiber exits the splice on the right side thereof and runs to the area A2.

Therefore, advantageously, in this second embodiment up to twenty-four optical fiber lengths with their respective splices may be arranged, without overlapping each other. Indeed, the optical fiber lengths having their splices housed in the splice holders of the first column C1 (i.e. F1 to F4 and F21 to F24) advantageously bypass the second column C2 through the fiber passageways FP12, FP32 and the third column C3 through the fiber passageways FP13, FP23 without overlapping with the other optical fiber lengths. Similarly, the optical fiber lengths having their splices housed in the splice holders of the second column C2 (i.e. F5 to F8 and F17 to F20) advantageously bypass the first column C1 through the fiber passageway FP11 and the third column C3 through the fiber passageways FP13, FP23 without overlapping with the other optical fiber lengths. Similarly, the optical fiber lengths having their splices housed in the splice holders of the third column C3 (i.e. F9 to F16) advantageously bypass the first column C1 through the fiber passageway FP11 and the second column C2 through the fiber passageway FP22.

Also the tray according to this second embodiment therefore advantageously guarantees accessibility of the optical fiber lengths and splices housed therein, and allows minimizing microbending losses and wear induced by friction between the optical fiber lengths arranged therein.

Further arrangements (not shown in the drawings) can be provided, in which each column of splice holders comprises passageways arranged in non-symmetrical positions along the column. For instance, an arrangement not shown in the drawings may comprise N columns of splice holders, each column comprising a single fiber passageway arranged at an end thereof. Fiber passageways of consecutive columns are arranged at opposed ends of the columns. The resulting arrangement (in the particular case of two columns) may be derived from the arrangement of Figure 5 by considering only the splice holders SH11-SH41 and the fiber passageway FP11 of the first column C1 and the fiber passageway FP12 and the splice holders SH12-SH42 of the second column C2.

## Claims

1. A tray (T) for housing optical fiber splices, said tray (T) comprising a splice holding area (A1) comprising a plurality of splice holders,
wherein said plurality of splice holders is arranged according to a two-dimensional arrangement comprising at least a first column (C1) and a second column (C2), wherein:
- said first column (C1) comprises a plurality of adjacent first splice holders (SH11-SH81) and a first fiber passageway (FP11, FP21) adjacent to said plurality of first adjacent splice holders (SH11-SH81) and suitable for housing lengths of a plurality of first optical fibers (F3-F6, F11-F14) so that they bypass said first column (C1); and
- said second column (C2) comprises a plurality of adjacent second splice holders (SH12-SH82) and a second fiber passageway (FP12, FP22, FP32) adjacent to said plurality of second adjacent splice holders (SH12-SH82) and suitable for housing lengths of a plurality of second optical fibers (F1-F2, F7-F10, F15-F16) so that they bypass said second column (C2),
**characterized in that** said splice holding area (A1) further comprises at least one divider (D1, D2, D3, D4) interposed between said first column (C1) and said second column (C2), said at least one divider (D1, D2, D3, D4) being arranged so as to divide an area between said first column (C1) and said second column (C2) into at least a first funnel-shaped portion and a second funnel-shaped portion, said first funnel-shaped portion and said second funnel-shaped portion being non overlapping, said first funnel-shaped portion having an opening facing said first fiber passageway (FP11, FP21) and a mouth facing said plurality of adjacent second splice holders (SH12-SH82) and said second funnel-shaped portion having an opening facing said second fiber passageway (FP12, FP22, FP32) and a mouth facing said plurality of adjacent first splice holders (SH11-SH81).

2. The tray (T) according to claim 1, wherein said first fiber passageway (FP11) and said second fiber passageway (FP12) are staggered.

3. The tray (T) according to claim 2, wherein said first column (C1) comprises two first fiber passageways (FP11, FP2) located in intermediate positions along said first column (C1), and said second column (C2) comprises three second fiber passageways (FP12, FP22, FP32) located at a first end, at the center and at a second end of said second column (C2), respectively, wherein the fiber passageways are associated with non-overlapping dividers, each divider having a funnel-shaped portion positioned between said first column and said second column and having an opening facing the respective fiber passageway and a mouth facing a plurality of splice holders on the column opposite to the column of the respective passageway.

4. The tray (T) according to claim 2, wherein said first column (C1) comprises said first fiber passageway (FP11) located at the centre of said first column (C1), and said second column (C2) comprises two second fiber passageways (FP12, FP32) located at opposite ends of said second column (C2), wherein the fiber passageways are associated with non-overlapping dividers, each divider having a funnel-shaped portion positioned between said first column and said second column and having an opening facing the respective fiber passageway and a mouth facing a plurality of splice holders on the column opposite to the column of the respective passageway.

5. The tray (T) according to claim 2, wherein said first column (C1) comprises said first fiber passageway located at an end of said first column (C1), and said second column (C2) comprises said second fiber passageway located at an opposite end of said second column (C2).

6. The tray (T) according to any of the preceding claims, wherein said first column (C1) and said second column (C2) are placed at a reciprocal distance, such that paths followed by said plurality of first optical fiber (F3-F6, F11-F14) and said plurality of second optical fiber (F1-F2, F7-F10, F15-F16) have a minimum bending radius higher than or equal to a predefined minimum bending radius.

7. The tray (T) according to any of the preceding claims, wherein said splice holding area (A1) further comprises guiding protrusions (GP1, GP2) respective passageway arranged between said first column (C1) and said second column (C2).

8. The tray (T) according to any of the preceding claims, wherein it comprises a surface (S), said surface (S) comprising said splice holding area (A1) and a fiber winding area (A2).

9. The tray (T) according to claim 8, wherein said splice holding area (A1) and said fiber winding area (A2) are non-overlapping adjacent areas divided by a division line substantially parallel to a length of said surface (S).

10. The tray (T) according to claim 8 or 9, wherein said surface (S) has outer guiding channels (GC-OUT) running close to a periphery of said surface (S).

11. The tray (T) according to claim 10, wherein said outer guiding channels (GC-OUT) enclose said splice holding area (A1) and said fiber winding area (A2).

12. The tray (T) according to claim 10 or 11, wherein said outer guiding channels (GC-OUT) have at least one separation and fixing comb (SC).

13. The tray (T) according to any of claims 8 to 12, wherein said fiber winding area (A2) has inner guiding channels (GC-IN).

14. The tray (T) according to any of the preceding claims, wherein it further comprises at least one hinge configured to fix said tray (T) to a base of an optical transition box, and to allow said tray (T) rotating between a first position in which it at least partially covers said base and a second position in which it allows free access to said base.

15. An optical transition box comprising a base, a cover and a tray (T) hinged to said base and configured to rotate between a first position in which it at least partially covers said base and a second position in which it allows free access to said base, said optical transition box being **characterized in that** said tray (T) is according to any of claims 1 to 14.

## Patentansprüche

1. Fach (T) zum Aufnehmen von optischen Faserspleißungen, wobei das Fach (T) eine Spleißungshaltefläche (A1) umfasst, die eine Mehrzahl von Spleißungshaltern umfasst, wobei die Mehrzahl von Spleißungshaltern entsprechend einer zweidimensionalen Anordnung angeordnet ist, die wenigstens eine erste Spalte (C1) und eine zweite Spalte (C2) umfasst, wobei:
die erste Spalte (C1) eine Mehrzahl von benachbarten ersten Spleißungshaltern (SH11-SH81) und einen ersten Faserdurchgang (FP11, FP21) benachbart zu der Mehrzahl von ersten benachbarten Spleißungshaltern (SH11-SH81) und mit der Eignung zum Aufnehmen von Längen einer Mehrzahl von ersten optischen Fasern (F3-F6, F11-F14) derart, dass diese die erste Spalte (C1) überbrücken bzw. umgehen, umfasst; und
die zweite Spalte (C2) eine Mehrzahl von benachbarten zweiten Spleißungshaltern (SH12-SH82) und einen zweiten Faserdurchgang (FP12, FP22, FP32) benachbart zu der Mehrzahl von zweiten benachbarten Spleißungshaltern (SH12-SH82) und mit der Eignung zum Aufnehmen von Längen einer Mehrzahl von zweiten optischen Fasern (F1-F2, F7-F10, F15-F16) derart, dass diese die zweite Spalte (C2) überbrücken bzw. umgehen, umfasst,
**dadurch gekennzeichnet, dass** die Spleißungshaltefläche (A1) des Weiteren wenigstens einen Unterteiler (D1, D2, D3, D4) umfasst, der zwischen der ersten Spalte (C1) und der zweiten Spalte (C2) angeordnet ist, wobei der wenigstens eine Unterteiler (D1, D2, D3, D4) derart angeordnet ist, dass er eine Fläche zwischen der ersten Spalte (C1) und der zweiten Spalte (C2) in wenigstens einen ersten trichterförmigen Abschnitt und
einen zweiten trichterförmigen Abschnitt unterteilt, wobei der erste trichterförmige Abschnitt und der zweite trichterförmige Abschnitt nicht überlappend sind, wobei der erste trichterförmige Abschnitt eine Öffnung, die zu dem ersten Faserdurchgang (FP11, FP21) weist, und eine Mündung, die zu der Mehrzahl von benachbarten zweiten Spleißungshaltern (SH12-SH82) weist, aufweist und der zweite trichterförmige Abschnitt eine Öffnung, die zu dem zweiten Faserdurchgang (FP12, FP22, FP32) weist, und eine Mündung, die zu der Mehrzahl von benachbarten ersten Spleißungshaltern (SH11-SH81) weist, aufweist.

2. Fach (T) nach Anspruch 1, wobei der erste Faserdurchgang (FP11) und der zweite Faserdurchgang (FP12) gestaffelt sind.

3. Fach (T) nach Anspruch 2, wobei die erste Spalte (C1) zwei erste Faserdurchgänge (FP11, FP2) umfasst, die in Zwischenpositionen entlang der ersten Spalte (C1) befindlich sind, und die zweite Spalte (C2) drei zweite Faserdurchgänge (FP12, FP22, FP32) umfasst, die an einem ersten Ende, in der Mitte beziehungsweise an einem zweiten Ende der zweiten Spalte (C2) befindlich sind, wobei die Faserdurchgänge nichtüberlappenden Unterteilern zugeordnet sind, wobei jeder Unterteiler einen trichterförmigen Abschnitt aufweist, der zwischen der ersten Spalte und der zweiten Spalte positioniert ist und eine Öffnung, die zu dem jeweiligen Faserdurchgang weist, und eine Mündung, die zu einer Mehrzahl von Spleißungshaltern an der Spalte entgegengesetzt bzw. gegenüberliegend zu der Spalte des jeweiligen Durchganges weist, aufweist.

4. Fach (T) nach Anspruch 2, wobei die erste Spalte (C1) den ersten Faserdurchgang (FP11) umfasst, der in der Mitte der ersten Spalte (C1) befindlich ist, und die zweite Spalte (C2) zwei zweite Faserdurchgänge (FP12, FP32) umfasst, die an entgegengesetzten bzw. gegenüberliegenden Enden der zweiten Spalte (C2) befindlich sind, wobei die Faserdurchgänge nichtüberlappenden Unterteilern zugeordnet sind, wobei jeder Unterteiler einen trichterförmigen Abschnitt aufweist, der zwischen der ersten Spalte und der zweiten Spalte positioniert ist und eine Öffnung, die zu dem jeweiligen Faserdurchgang weist, und eine Mündung, die zu einer Mehrzahl von Spleißungshaltern an der Spalte entgegengesetzt bzw. gegenüberliegend zu der Spalte des jeweiligen Durchganges weist, aufweist.

5. Fach (T) nach Anspruch 2, wobei die erste Spalte (C1) den ersten Faserdurchgang umfasst, der an einem Ende der ersten Spalte (C1) befindlich ist, und die zweite Spalte (C2) den zweiten Faserdurchgang umfasst, der an einem entgegengesetzten bzw. gegenüberliegenden Ende der zweiten Spalte (C2) befindlich ist.

6. Fach (T) nach einem der vorhergehenden Ansprüche, wobei die erste Spalte (C1) und die zweite Spalte (C2) in einem wechselseitigen Abstand derart platziert sind, dass Wege, denen von der Mehrzahl von ersten optischen Fasern (F3-F6, F11-F14) und der Mehrzahl von zweiten optischen Fasern (F1-F2, F7-F10, F15-F16) gefolgt wird, einen minimalen Biegeradius aufweisen, der größer oder gleich einem vorbestimmten minimalen Biegeradius ist.

7. Fach (T) nach einem der vorhergehenden Ansprüche, wobei die Spleißungshaltefläche (A1) des Weiteren Führungsvorsprünge (GP1, GP2) umfasst, die zwischen der ersten Spalte (C1) und der zweiten Spalte (C2) angeordnet sind.

8. Fach (T) nach einem der vorhergehenden Ansprüche, wobei dieses eine Oberfläche (S) umfasst, wobei die Oberfläche (S) die Spleißungshaltefläche (A1) und eine Faserwindungsfläche (A2) umfasst.

9. Fach (T) nach Anspruch 8, wobei die Spleißungshaltefläche (A1) und die Faserwindungsfläche (A2) nicht überlappende benachbarte Flächen sind, die durch eine Unterteilungslinie im Wesentlichen parallel zu einer Länge der Oberfläche (S) unterteilt sind.

10. Fach (T) nach Anspruch 8 oder 9, wobei die Oberfläche (S) äußere Führungskanäle (GC-OUT) aufweist, die nahe an einem Umfang der Oberfläche (S) verlaufen.

11. Fach (T) nach Anspruch 10, wobei die äußeren Führungskanäle (GC-OUT) die Spleißungshaltefläche (A1) und die Faserwindungsfläche (A2) einschließen.

12. Fach (T) nach Anspruch 10 oder 11, wobei die äußeren Führungskanäle (GC-OUT) wenigstens eine Trennung und einen Fixierkamm (SC) aufweisen.

13. Fach (T) nach einem der Ansprüche 8 bis 12, wobei die Faserwindungsfläche (A2) innere Führungskanäle (GC-IN) aufweist.

14. Fach (T) nach einem der vorhergehenden Ansprüche, wobei dieses des Weiteren wenigstens ein Gelenk umfasst, das dafür ausgelegt ist, das Fach (T) an einer Basis eines optischen Schaltkastens zu fixieren und zu ermöglichen, dass sich das Fach (T) zwischen einer ersten Position, in der es wenigstens teilweise die Basis bedeckt, und einer zweiten Position, in der es einen freien Zugang zu der Basis ermöglicht, dreht.

15. Optischer Schaltkasten, umfassend eine Basis, eine Abdeckung und ein Fach (T), das an der Basis angelenkt und dafür ausgelegt ist, sich zwischen einer ersten Position, in der es wenigstens teilweise die Basis bedeckt, und einer zweiten Position, in der es einen freien Zugang zu der Basis ermöglicht, zu drehen, wobei der optische Schaltkasten **dadurch gekennzeichnet ist, dass** das Fach (T) nach einem der Ansprüche 1 bis 14 ist.

## Revendications

1. Plateau (T) pour loger des épissures de fibres optiques, ledit plateau (T) comprenant une zone de retenue d'épissure (A1) comprenant une pluralité d'organes de retenue d'épissure,
dans lequel ladite pluralité d'organes de retenue d'épissure est agencée selon un agencement bidimensionnel comprenant au moins une première colonne (C1) et une seconde colonne (C2), dans lequel :
- ladite première colonne (C1) comprend une pluralité de premiers organes de retenue d'épissure adjacents (SH11-SH81) et une première voie de passage de fibre (FP11, FP21) adjacente à ladite pluralité de premiers organes de retenue d'épissure adjacents (SH11 -SH81) et appropriée pour loger des longueurs d'une pluralité de premières fibres optiques (F3-F6, F11-F14) pour qu'elles contournent ladite première colonne (C1) ; et
- ladite seconde colonne (C2) comprend une pluralité de seconds organes de retenue d'épissure adjacents (SH12-SH82) et une seconde voie de passage de fibre (FP12, FP22, FP32) adjacente à ladite pluralité de seconds organes de retenue d'épissure adjacents (SH12-SH82) et appropriée pour loger des longueurs d'une pluralité de secondes fibres optiques (F1-F2, F7-F10, F15-F16) pour qu'elles contournent ladite seconde colonne (C2),
**caractérisé en ce que** ladite zone de retenue d'épissure (A1) comprend en outre au moins un diviseur (D1, D2, D3, D4) interposé entre ladite première colonne (C1) et ladite seconde colonne (C2), ledit au moins un diviseur (D1, D2, D3, D4) étant agencé afin de diviser une zone entre ladite première colonne (C1) et ladite seconde colonne (C2) en au moins une première partie en forme d'entonnoir et une seconde partie en forme d'entonnoir, ladite première partie en forme d'entonnoir et ladite seconde partie en forme d'entonnoir ne se chevauchant pas, ladite première partie en forme d'entonnoir comportant une ouverture faisant face à ladite première voie de passage de fibre (FP11, FP21) et une embouchure faisant face à ladite pluralité de seconds organes de retenue d'épissure adjacents (SH12-SH82) et ladite seconde partie en forme d'entonnoir comportant une ouverture faisant face à ladite seconde voie de passage de fibre (FP12, FP22, FP32) et une embouchure faisant face à ladite pluralité de premiers organes de retenue d'épissure adjacents (SH11-SH81).

2. Plateau (T) selon la revendication 1, dans lequel ladite première voie de passage de fibre (FP11) et ladite seconde voie de passage de fibre (FP12) sont décalées.

3. Plateau (T) selon la revendication 2, dans lequel ladite première colonne (C1) comprend deux premières voies de passage de fibre (FP11, FP2) situées dans des positions intermédiaires le long de ladite première colonne (C1), et ladite seconde colonne (C2) comprend trois secondes voies de passage de fibre (FP12, FP22, FP32) situées à une première extrémité, au centre et à une seconde extrémité de ladite seconde colonne (C2), respectivement, dans lequel les voies de passage de fibre sont associées à des diviseurs ne se chevauchant pas, chaque diviseur comportant une partie en forme d'entonnoir positionnée entre ladite première colonne et ladite seconde colonne et comportant une ouverture faisant face à la voie de passage de fibre respective et une embouchure faisant face à une pluralité d'organes de retenue d'épissure sur la colonne opposée à la colonne de la voie de passage respective.

4. Plateau (T) selon la revendication 2, dans lequel ladite première colonne (C1) comprend ladite première voie de passage de fibre (FP11) située au centre de ladite première colonne (C1), et ladite seconde colonne (C2) comprend deux secondes voies de passage de fibre (FP12, FP32) situées à des extrémités opposées de ladite seconde colonne (C2), dans lequel les voies de passage de fibre sont associées à des diviseurs ne se chevauchant pas, chaque diviseur comportant une partie en forme d'entonnoir positionnée entre ladite première colonne et ladite seconde colonne et comportant une ouverture faisant face à la voie de passage de fibre respective et une embouchure faisant face à une pluralité d'organes de retenue d'épissure sur la colonne opposée à la colonne de la voie de passage respective.

5. Plateau (T) selon la revendication 2, dans lequel ladite première colonne (C1) comprend ladite première voie de passage de fibre située à une extrémité de ladite première colonne (C1), et ladite seconde colonne (C2) comprend ladite seconde voie de passage de fibre située à une extrémité opposée de ladite seconde colonne (C2).

6. Plateau (T) selon une quelconque des revendications précédentes, dans lequel ladite première colonne (C1) et ladite seconde colonne (C2) sont placées à une distance réciproque, telle que des trajets suivis par ladite pluralité de premières fibres optiques (F3-F6, F11-F14) et ladite pluralité de secondes fibres optiques (F1-F2, F7-F10, F15-F16) possèdent un rayon de flexion minimal supérieur ou égal à un rayon de flexion minimal prédéfini.

7. Plateau (T) selon une quelconque des revendications précédentes, dans lequel ladite zone de retenue d'épissure (A1) comprend en outre des protubérances de guidage (GP1, GP2) disposées entre ladite première colonne (C1) et ladite seconde colonne (C2).

8. Plateau (T) selon une quelconque des revendications précédentes, dans lequel il comprend une surface (S), ladite surface (S) comprenant ladite zone de retenue d'épissure (A1) et une zone d'enroulement de fibre (A2).

9. Plateau (T) selon la revendication 8, dans lequel ladite zone de retenue d'épissure (A1) et ladite zone d'enroulement de fibre (A2) sont des zones adjacentes ne se chevauchant pas divisées par une ligne de division sensiblement parallèle à une longueur de ladite surface (S).

10. Plateau (T) selon la revendication 8 ou 9, dans lequel ladite surface (S) comporte des canaux de guidage extérieurs (GC-OUT) se trouvant près d'une périphérie de ladite surface (S).

11. Plateau (T) selon la revendication 10, dans lequel lesdits canaux de guidage extérieurs (GC-OUT) renferment ladite zone de retenue d'épissure (A1) et ladite zone d'enroulement de fibre (A2).

12. Plateau (T) selon la revendication 10 ou 11, dans lequel lesdits canaux de guidage extérieurs (GC-OUT) comportent au moins un peigne de séparation et de fixation (SC).

13. Plateau (T) selon une quelconque des revendications 8 à 12, dans lequel ladite zone d'enroulement de fibre (A2) comporte des canaux de guidage intérieurs (GC-IN).

14. Plateau (T) selon une quelconque des revendications précédentes, dans lequel il comprend en outre au moins une articulation configurée pour fixer ledit plateau (T) à une base d'une boîte de transition optique, et pour permettre audit plateau (T) de tourner entre une première position, dans laquelle il recouvre au moins partiellement ladite base, et une seconde position, dans laquelle il permet l'accès libre à ladite base.

15. Boîte de transition optique comprenant une base, un couvercle et un plateau (T) articulé sur ladite base et configuré pour tourner entre une première position, dans laquelle il recouvre au moins partiellement ladite base, et une seconde position, dans laquelle il permet l'accès libre à ladite base, ladite boîte de transition optique étant **caractérisée en ce que** ledit plateau (T) est selon une quelconque des revendications 1 à 14.
